# EUROPÄISCHE PATENTSCHRIFT

(11) **EP 2 905 176 B1**
(45) Veröffentlichungstag und Bekanntmachung des Hinweises auf die Patenterteilung: **31.01.2018**
(21) Anmeldenummer: 15154242.0
(22) Anmeldetag: 06.02.2015
(51) Int. Cl.: A62C 13/78, B60R 11/06, A62C 27/00

(54) **LAGERUNGSSYSTEM FÜR AUSRÜSTUNGSGEGENSTÄNDE IN EINEM EINSATZFAHRZEUG**
STORAGE SYSTEM FOR EQUIPMENT IN AN EMERGENCY VEHICLE
SYSTÈME DE STOCKAGE POUR DES OBJETS D'ÉQUIPEMENT DANS UN VÉHICULE D'INTERVENTION

(30) Priorität: 07.02.2014 DE 202014100545 U
(43) Veröffentlichungstag der Anmeldung: 12.08.2015
(73) Patentinhaber: IVECO MAGIRUS AG, D-89079 Ulm (DE)
(72) Erfinder: Reisl, Christian, 8501 Lieboch (AT)
(74) Vertreter: Franzolin, Luigi

(56) Entgegenhaltungen:
- DE-A1- 4 215 368
- DE-A1- 10 224 441
- GB-A- 2 464 214
- US-A- 5 855 310
- US-A1- 2007 119 890
- US-A1- 2014 021 232

## Beschreibung

Die vorliegende Erfindung betrifft ein Lagerungssystem für Ausrüstungsgegenstände in einem Einsatzfahrzeug.

In Einsatzfahrzeugen, beispielsweise in Feuerwehrfahrzeugen, muss stets eine große Vielfalt von Ausrüstungsgegenständen mitgeführt werden, die typischerweise im Einsatz benötigt werden und zur Pflichtbeladung des Fahrzeugs gehören. In Feuerwehrfahrzeugen beispielsweise müssen Gegenstände wie Winkkellen zur Sicherung des Einsatzortes, Taschenlampen, Handfeuerlöscher, Handfunkgeräte, Werkzeug und dergleichen mehr stets griffbereit sein, damit die Mitglieder der Rettungsmannschaft beim Einsatz nicht unnötige Zeit mit dem Suchen eines gerade benötigten Gegenstands verlieren und sich dabei Gefahren wie z.B. dem Straßenverkehr aussetzen. Der Einfachheit halber soll im folgenden auf Feuerwehrfahrzeuge als ein Beispiel für Einsatzfahrzeuge Bezug genommen werden, auf welche die Erfindung anwendbar ist. Allerdings ist dies nicht als beschränkend zu verstehen, und die vorliegende Erfindung ist gleichermaßen auf andere Arten von Einsatzfahrzeugen anwendbar, wie etwa auf Notfallkrankenwagen, Fahrzeuge des technischen Hilfswerks, Polizeifahrzeuge oder dergleichen.

Bisher war es üblich, kleinere Ausrüstungsgegenstände im Laderaum eines Feuerwehrfahrzeugs zu verstauen. Die Zugänglichkeit der Gegenstände wird hierdurch häufig erschwert, da diese häufig ungeordnet im Laderaum liegen und nicht mit einem einzigen Handgriff entnehmbar sind. Vielmehr ist es erwünscht, dass die Besatzung des Fahrzeugs die am Einsatzort benötigten Gegenstände bereits bei der Anfahrt im Blick hat, so dass diese beim Eintreffen und beim Verlassen des Fahrzeugs sofort zur Hand sind, ohne dass zuerst der Laderaum geöffnet und der benötigte Gegenstand gesucht werden muss. Die Einsatzmannschaft soll nicht zusätzlichen Gefahren ausgesetzt werden. Zudem ist es erwünscht, im Laderaum Platz zu sparen, der gegebenenfalls für Gegenstände anderer Art benötigt wird.

Aufgabe der vorliegenden Erfindung ist es daher, ein verbessertes Lagerungssystem für Ausrüstungsgegenstände in einem Rettungsfahrzeug zu schaffen, das das vorstehend genannte Problem überwindet, insbesondere also Aufbewahrungsmöglichkeiten für solche Gegenstände im Fahrzeug schafft, die von der Rettungsmannschaft leicht überblickt werden können und einen schnelleren und sicheren Zugriff ermöglichen. Zudem soll dieses Lagerungssystem keinen Platz im Laderaum beanspruchen. WO 01/83036 A1 beschreibt ein Einsatzfahrzeug gemäß den Oberbegriff des Patentanspruchs 1. Diese Aufgabe wird erfindungsgemäß durch ein Lagerungssystem für Ausrüstungsgegenstände gemäß Anspruch 1 gelöst.

Das erfindungsgemäße Lagerungssystem umfasst zumindest ein Lagerungsmodul, das in eine seitliche Innenwand des Fahrzeuginnenraums integriert ist, wie etwa in die Seitenwand einer Mannschaftskabine im Bereich hinter dem Fahrer- oder Beifahrersitz. Das Lagerungsmodul bildet einen Teil der inneren Wandauskleidung und kann die herkömmliche Wandauskleidung in diesem Bereich ersetzen. Es umfasst eine Anzahl von Halterungen, die die Ausrüstungsgegenstände lösbar aufnehmen. Die Gegenstände werden somit während der Fahrt sicher am oder im Modul gehalten, bleiben jedoch übersichtlich angeordnet und lassen sich mit einem einzigen Handgriff entnehmen. Die Halterungen sind zu diesem Zweck entsprechend auszustatten, so dass sie einerseits sicheren Halt bieten, jedoch leicht zu lösende Befestigungen für die Gegenstände aufweisen. Durch die vorliegende Erfindung wird somit der Platz an der Innenwand genutzt, um die Ausrüstungsgegenstände nebeneinander oder übereinander anordnen zu können. Die Besatzungsmitglieder, die sich im Fahrzeug aufhalten, haben somit schon während der Fahrt zum Einsatzort einen guten Überblick und können die benötigten Gegenstände beim Eintreffen am Einsatzort bereits zur Hand haben oder gleichzeitig mit dem Aussteigen aus dem Fahrzeug zur Hand nehmen. Im Laderaum wird kein Platz für die Ausrüstungsgegenstände benötigt, die im Lagerungsmodul untergebracht sind.

Gemäß einer bevorzugten Ausführungsform der vorliegenden Erfindung ist das Lagerungsmodul lösbar an der Innenwand des Fahrzeuginnenraums montiert. Ein einfacher Austausch des Moduls gegen ein anders gestaltetes Modul oder gegen ein herkömmliches Innenauskleidungselement bleibt somit stets möglich.

Gemäß einer weiteren bevorzugten Ausführungsform der vorliegenden Erfindung umfasst das Lagerungssystem eine Mehrzahl von Lagerungsmodulen, die untereinander an ihrer Montageposition an der Innenwand des Fahrzeuginnenraums austauschbar sind.

Vorzugsweise umfassen die Halterungen Klemmen, Gurte, Steckaufnahmen, Behälter und/oder Regale.

Weiter vorzugsweise ist das Lagerungsmodul aus Metall hergestellt, insbesondere aus Aluminium oder einer Aluminiumlegierung.

Die vorliegende Erfindung umfasst ferner ein Einsatzfahrzeug, insbesondere Feuerwehrfahrzeug, umfassend eine Mannschaftskabine, die zumindest einen Teil des Fahrzeuginnenraums bildet, und ein Lagerungssystem für Ausrüstungsgegenständegemäß der vorstehend beschriebenen Art, wobei mindestens ein Lagerungsmodul in eine seitliche Innenwand der Mannschaftskabine integriert ist und zumindest einen Teil ihrer inneren Wandauskleidung bildet.

Gemäß einer bevorzugten Ausführungsform ist das Lagerungsmodul in den Innenbereich einer Kabinentür integriert ist, durch welche die Mannschaftskabine zugänglich ist.

Weitere Merkmale, Vorzüge und Vorteile der vorliegenden Erfindung werden anhand der folgenden Beschreibung mit Bezug auf die beigefügte Zeichnung deutlich.
- Fig. 1: ist eine schematische Ansicht eines Teils einer seitlichen Innenwand der Mannschaftskabine eines Feuerwehrfahrzeugs, welches ein Ausführungsbeispiel eines erfindungsgemäßen Einsatzfahrzeugs bildet;
- Fig. 2: ist eine schematische Seitenansicht der Innenwand des Feuerwehrfahrzeugs aus Fig. 1; und
- Fig. 3 bis 6: sind verschiedene Ansichten eines Lagerungsmoduls, das Bestandteil eines Lagerungssystems gemäß einer weiteren Ausführungsform der vorliegenden Erfindung ist.

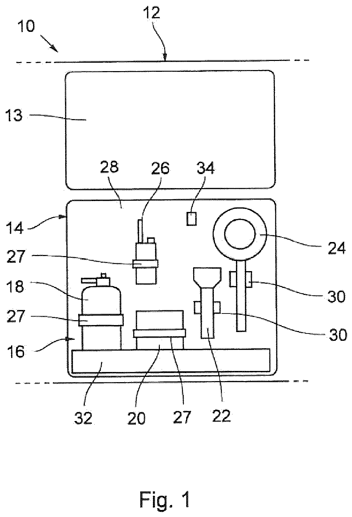

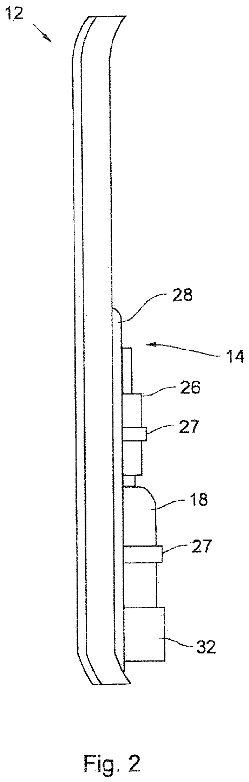

Das in Fig. 1 und 2 in Teilansichten dargestellte Feuerwehrfahrzeug 10 stellt ein Beispiel für ein Einsatzfahrzeug dar, das mit einem Lagerungssystem für Ausrüstungsgegenstände gemäß der vorliegenden Erfindung ausgestattet ist. Fig. 1 zeigt eine Innenansicht des Feuerwehrfahrzeug 10 mit Blick auf eine seitliche Innenwand 12 der Mannschaftskabine im Bereich hinter dem Fahrer- oder Beifahrersitz.

Die Innenwand 12 umfasst in ihrem unteren inneren Bereich unterhalb des Fensters 13 ein Lagerungsmodul 14 zur Aufnahme diverser Ausrüstungsgegenstände, die in ihrer Gesamtheit mit dem Bezugszeichen 16 bezeichnet werden sollen. Im einzelnen handelt es sich hierbei um einen Handfeuerlöscher 18, eine Rettungsdecke 20, eine Stablampe 22, eine Winkkelle 24 und ein Handfunkgerät 26. Diese einzelnen Gegenstände 18, 20, 22, 24, 26 sind jedoch lediglich beispielhaft dargestellt, und es können im Rahmen der vorliegenden Erfindung auch beliebige andere Ausrüstungsgegenstände 16 in dem Lagerungsmodul 14 untergebracht werden.

Das Lagerungsmodul 14 ist in die Innenwand 12 derart integriert, dass es deren innere Auskleidung bildet. Es ersetzt im vorliegenden Fall die herkömmliche Wandauskleidung vollständig und ist auf vergleichbare Weise am Chassis des Fahrzeugs befestigt. Durch Verwendung vergleichbarer Montagemittel lässt sich somit ein Teil der herkömmlichen Wandauskleidung einfach gegen das erfindungsgemäße Lagerungsmodul 14 austauschen. Dies hat zur Folge, dass sich auch herkömmliche Einsatzfahrzeuge in einfacher Weise mit dem erfindungsgemäßen Lagerungssystem nachrüsten lassen, ohne dass konstruktive Änderungen am Chassis vorgenommen werden müssen. Ferner ist es möglich, ein in bestimmter Weise gestaltetes Lagerungsmodul 14 gegen ein anderes Modul auszutauschen, das beispielsweise mit einer anderen Gestaltung und Anordnung der Halterungen ausgestattet ist, um andere Ausrüstungsgegenstände 16 aufzunehmen. Das erfindungsgemäße Lagerungssystem ist somit auch nach der Installation noch sehr variabel.

Halterungen zur lösbaren Aufnahme der Ausrüstungsgegenstände 16 umfassen im vorliegenden Beispiel Gurte 27, mit deren Hilfe sich einzelne Ausrüstungsgegenstände 16 an die Rückwand 28 des Lagerungsmoduls 14 anschnallen lassen, Klemmen 30, durch welche sich stabförmige Ausrüstungsgegenstände 16 wie etwa die Stablampe 22 und die Winkkelle 24 festklemmen lassen, und ein unteres Regal 32, in das sich schwerere Gegenstände wie beispielsweise der Handfeuerlöscher 18 hineinstellen lassen. Die Halterungen sind so zu gestalten, dass sich die gehaltenen Ausrüstungsgegenstände 16 zu jeder Zeit leicht und ohne größere Manipulationen der Halterung entnehmen lassen. Die Gurte 27 können beispielsweise mit einem Druckknopf oder einem Klettverschluss verschlossen sein, oder als elastische Gummizüge ausgebildet sein, in die sich die Ausrüstungsgegenstände 16 leicht einklemmen lassen. Ebenso müssen sich die Ausrüstungsgegenstände 16 aus den elastischen Klemmen 30 mit einem einzigen Handgriff lösen lassen.

In die Rückwand 28 des Lagerungsmoduls 14 können Bedienungselemente 34 des Fahrzeugs integriert sein, wie auch in herkömmliche Wandauskleidungen. In vorteilhaf ter Weise können solche Bedienungselemente an der gleichen Stelle angeordnet sein, wie bei einer herkömmlichen Wandauskleidung, was zur Austauschbarkeit der Lagerungsmodule 14 und der Nachrüstbarkeit des gesamten erfindungsgemäßen Lagerungssystems beiträgt.

Der Platzbedarf innerhalb der Mannschaftskabine bleibt relativ gering, wie aus der Seitenansicht der Wand 12 in Fig. 2 ersichtlich wird. Das Lagerungsmodul 14 kann eine größere Tiefe aufweisen als herkömmliche Wandauskleidungen, jedoch ist der benötigte zusätzliche Platzbedarf in der Mannschaftskabine vertretbar, zumal im Laderaum des Feuerwehrfahrzeugs 10 durch die Verlagerung der Ausrüstungsgegenstände 16 in das Lagerungsmodul 14 Platz gewonnen wird.

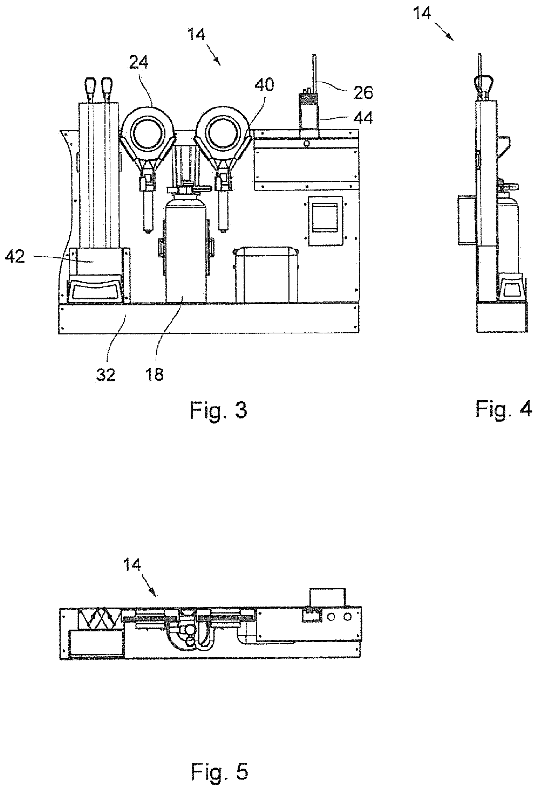

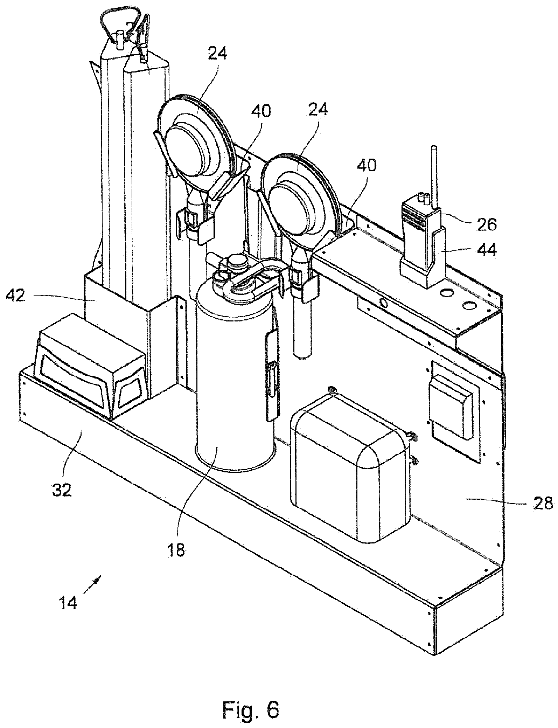

Die Fig. 3 bis 6 zeigen eine konkrete weitere Ausführungsform des erfindungsgemäßen Lagerungsmoduls 14 jeweils in Seitenansichten aus verschiedenen Perspektiven (Fig. 3 und 4, entsprechend den Fig. 1 und 2), einer Draufsicht (Fig. 5) und einer perspektivischen Ansicht (Fig. 6). Die Halterungen sind hier teilweise anders gestaltet und umfassen auch relativ einfache Aufnahmen 40, 42, 44, die nach oben offen sind und aus denen sich die Ausrüstungsgegenstände 16 einfach herausheben lassen.

Das erfindungsgemäße Lagerungssystem mit dem dargestellten Lagerungsmodul 14 ist nicht nur auf Feuerwehrfahrzeuge 10 anwendbar, sondern auf andere Arten von Einsatzfahrzeugen, wie etwa Rettungsfahrzeugen oder dergleichen. In einer spezifischen Ausführungsform der Erfindung stellt der Bereich der Innenwand 12, in den das Lagerungsmodul 14 integriert ist, eine Kabinentür der Mannschaftskabine dar. Das Lagerungsmodul 14 ist in diesem Fall in den unteren Türbereich integriert und ersetzt die herkömmliche Türauskleidung.

## Patentansprüche

1. Einsatzfahrzeug, insbesondere Feuerwehrfahrzeug, umfassend eine Mannschaftskabine, die zumindest einen Teil des Fahrzeuginnenraums bildet, und ein Lagerungssystem für Ausrüstungsgegenstände (16),
**gekennzeichnet durch** eine Anzahl von Lagerungsmodulen (14), die jeweils eine Anzahl von Halterungen zur lösbaren Aufnahme von Ausrüstungsgegenständen (16) in unterschiedlichen Gestaltungen und Anordungen umfassen
und von denen zumindest ein Lagerungsmodul (14) in den Innenbereich einer Kabinentür integriert ist, der einen Teil der seitlichen Innenwand (12) der Mannschaftskabine bildet,
wobei das Lagerungsmodul (14) eine innere Türauskleidung als Ersatz für eine herkömmliche Türauskleidung bildet und an der Kabinentür lösbar montiert ist und gegen ein anderes Lagerungsmodul (14) austauschbar ist.

2. Lagerungssystem gemäßAnspruch 1, **dadurch gekennzeichnet, dass** die Halterungen Klemmen (30), Gurte (27), Steckaufnahmen (40,42,44), Behälter und/oder Regale (32) umfassen.

3. Lagerungssystem gemäß einem der vorhergehenden Ansprüche, **dadurch gekennzeichnet, dass** das Lagerungsmodul (14) aus Metall hergestellt ist, insbesondere aus Aluminium oder einer Aluminiumlegierung.

## Claims

1. Emergency vehicle, in particular fire engine, comprising a crew cabin which forms at least one part of the vehicle interior, and a storage system for equipment (16),
**characterised by** a number of storage modules (14) which each comprise a number of holders for detachably receiving equipment (16) in different designs and arrangements,
and, of these, at least one storage module (14) is integrated into the inner region of a cabin door, which forms a part of the lateral inner wall (12) of the crew cabin,
wherein the storage module (14) forms an inner door lining as a replacement for a conventional door lining and is detachably mounted on the cabin door and is interchangeable with a different storage module (14).

2. Storage system according to claim 1, **characterised in that** the holders comprise clamps (30), belts (27), sockets (40, 42, 44), containers and/or shelves (32).

3. Storage system according to one of the preceding claims, **characterised in that** the storage module (14) is made of metal, in particular aluminium or an aluminium alloy.

## Revendications

1. Véhicule d'intervention, en particulier véhicule d'incendie, comprenant une cabine pour les équipiers qui constitue au moins une partie de l'espace intérieur du véhicule, et un système de stockage destiné aux équipements (16), **caractérisé par** un nombre de modules de stockage (14) comprenant chacun un nombre de fixations destinées à accueillir de manière détachable des équipements (16) dans différentes configurations et dispositions, et dont au moins un module de stockage (14) est intégré à l'intérieur d'une porte de cabine, lequel constitue une partie de la paroi intérieure latérale (12) de la cabine pour les équipiers, le module de stockage (14) formant un habillage de porte intérieure en remplacement d'un habillage de porte intérieure classique, et est monté de manière mobile sur la porte de cabine et peut être remplacé par un autre module de stockage (14).

2. Système de stockage selon la revendication 1, **caractérisé en ce que** les fixations comportent des mâchoires (30), des sangles (27), des systèmes d'enfichage (40, 42, 44), des contenants et/ou des étagères (32).

3. Système de stockage selon l'une quelconque des revendications précédentes, **caractérisé en ce que** le module de stockage (14) est en métal, en particulier en aluminium ou un alliage d'aluminium.
